# EUROPEAN PATENT APPLICATION

(11) **EP 1 933 087 A2**
(43) Date of publication of application: **18.06.2008**
(21) Application number: 07117815.6
(22) Date of filing: 03.10.2007
(51) Int. Cl.: F23C 10/00, F23C 99/00

(54) **Systems and methods using an unmixed fuel processor**

(30) Priority: 11.12.2006 US 609109
(71) Applicant: General Electric Company, Schenectady, NY 12345 (US)
(72) Inventor: Kulkarni, Parag Prakash, Tustin, CA 92618 (US); Rizeq, George Rizeq, Mission Viejo, CA 92692 (US); Subia, Raul Fernando, Anaheim, CA 92805 (US)
(74) Representative: Bedford, Grant Richard

(57) **Abstract**

Disclosed herein are systems and method for using unmixed fuel processors (80). In one embodiment, a system for using an unmixed fuel processor (80) comprises: an unmixed fuel processor (80) and a power generating unit (100). The unmixed fuel processor (80) comprises: a gasification reactor (28), an oxidation reactor (32) and a regeneration reactor (30). The gasification reactor (28) comprises a CO₂ sorbent material. The oxidation reactor (32) comprises an oxygen transfer material. The regeneration reactor (30) is configured to receive spent CO₂ sorbent material from the gasification reactor (28) and to return regenerated CO₂ sorbent material to the gasification reactor (28), and configured to receive oxidized oxygen transfer material from the oxidation reactor (32) and to return reduced oxygen transfer material to the oxidation reactor (32). The power generating unit (100) configured to receive an oxygen depleted stream from the oxidation reactor (32) and to produce electricity.

## Description

This application relates generally to unmixed fuel processors, and more particularly, to systems and methods for producing electricity and/or hydrogen using unmixed fuel processors.

With its abundant domestic supply, coal is one of the most secure, reliable, and affordable energy supplies for the U.S. today, gasification of coal to produce electricity is being commercially introduced as Integrated Gasification Combined Cycle (IGCC) power plants. However, one of the major problems in modern industrial society is the air pollution by conventional combustion systems based on fossil fuels. The oldest recognized air pollution problem is the emission of smoke. In modern boilers and furnaces, smoke emissions could be eliminated or at least greatly reduced by the use of Over Fire Air ("OFA") technology. Other types of air pollution produced by combustion include particulate emissions such as fine particles of ash from pulverized coal firing, oxides of sulfur (SO₂ and SO₃), carbon monoxide emissions, volatile hydrocarbon emissions and the release of two oxides of nitrogen, NO and NO₂. More recently, the problem of global warming due to greenhouse gas emissions of CO₂ from power plants and other combustion systems has become a matter of serious environmental concern.

Another major technological problem concerns the use of coal as a fuel for powering gas turbines. Gas turbines are the lowest capital cost systems available for generating electrical power. Since the thermodynamic efficiency of gas turbines increases with increasing turbine inlet temperature, efforts to improve turbine efficiency generally involve increasing the turbine inlet temperature to higher levels. As a result, turbine blades and other components have been engineered to tolerate increasing high inlet temperatures. It is well known that the hot gases produced by coal firing contain fly ash (which is erosive to turbine blades). In the presence of this erosive fly ash, the maximum service temperature at which turbine blades can operate is less than it would be otherwise. This limitation significantly decreases the overall process efficiency and lowers the competitiveness of coal as a gas turbine fuel. These and other disadvantages have also prevented lower cost (and abundant) coal from being considered an attractive gas turbine fuel. If a process were developed whereby coal could be burned in a manner that produced hot gases that were not erosive or corrosive, the need for temperature reduction would be eliminated and coal would become a much more economically viable gas turbine fuel.

U.S. Pat. Nos. 5,339,754, 5,509,362, and 5,827,496, disclose a method of burning fuels using a catalyst that is readily reduced when in an oxidized state and readily oxidized when in a reduced state, with the fuel and air being alternatively contacted with the catalyst. The fuel reduces the catalyst and is oxidized to carbon dioxide (CO₂) and water vapor. In turn, the air oxidizes the catalyst and becomes depleted of oxygen. Combustion can thereby be effected without the need of mixing the fuel and air prior to or during the combustion process. If means are provided whereby the CO₂ and water vapor and the oxygen depleted air can be directed in different directions as they leave the combustion process, the mixing of fuel and air can be completely avoided. This particular method of combustion has become known in the art as "unmixed combustion".

Hence, there continues to be a need for more efficient, environmentally friendly, reliable power generation process.

Disclosed herein are embodiments of systems and method for using unmixed fuel processors. In one embodiment, a system for using an unmixed fuel processor comprises: an unmixed fuel processor and a power generating unit. The unmixed fuel processor comprises: a gasification reactor, an oxidation reactor and a regeneration reactor. The gasification reactor has a solid hydrocarbon fuel inlet, water inlet, and hydrogen outlet, and comprises a CO₂ sorbent material. The oxidation reactor has an air inlet and effluent outlet, and comprises an oxygen transfer material. The regeneration reactor has a CO₂ stream outlet and is configured to receive spent CO₂ sorbent material from the gasification reactor and to return regenerated CO₂ sorbent material to the gasification reactor, and configured to receive oxidized oxygen transfer material from the oxidation reactor and to return reduced oxygen transfer material to the oxidation reactor. The power generating unit configured to receive an oxygen depleted stream from the oxidation reactor and to produce electricity.

In one embodiment, a method for using an unmixed fuel processor comprises: gasifying a solid hydrocarbon fuel with water, capturing CO₂ with a CO₂ sorbent material to produce a spent CO₂ sorbent material and a hydrogen stream comprising hydrogen, oxidizing an oxygen transfer material and producing an oxygen depleted stream in an oxidation reactor, regenerating the spent CO₂ sorbent material and the oxidized oxygen transfer material and producing a CO₂ stream, and generating electricity in a power generating unit with the oxygen depleted stream.

Various aspects and embodiments of the present invention will now be described in connection with the accompanying drawings, in which:

Figure 1 is a schematic illustration of an exemplary embodiment of an unmixed fuel processor (UFP) system.

Figure 2 is a schematic diagram of an exemplary embodiment of an integrated gasification combined cycle (IGCC) polygeneration plant including CO₂ capture.

Figure 3 is a schematic diagram of an exemplary embodiment of an unmixed fuel processor polygen system with CO₂ separation.

Figure 4 is a schematic diagram of an exemplary embodiment of unmixed fuel processor polygen system with combustion of the PSA off-gas.

Figure 5 is a schematic diagram of an exemplary embodiment of unmixed fuel processor polygen system with use of the H₂ and the CO₂ and/or N₂

Figure 6 is a schematic diagram of an exemplary embodiment of unmixed fuel processor polygen system with CO₂ separation for electricity generation at low pressure.

Integrated gasification combined cycle (IGCC) technology is well suited to better meet the needs for power generation from coal more cleanly than other technologies. It is also compatible with carbon sequestration and production of hydrogen fuel. Also, since unmixed fuel processor (UFP) technology offers the potential for reduced cost, increased process efficiency, and/or lower emissions relative to other gasification and combustion systems, a combination of the combined cycle (CC) and UFP technologies could be improve efficiency in an environmentally friendly fashion. This combined technology could be employed in conjunction with fuel cells and/or with additional plants (e.g., urea and/or ammonia generating plants) to produce electricity, urea, and/or ammonia, while also producing a stream that is ripe for CO₂ sequestration.

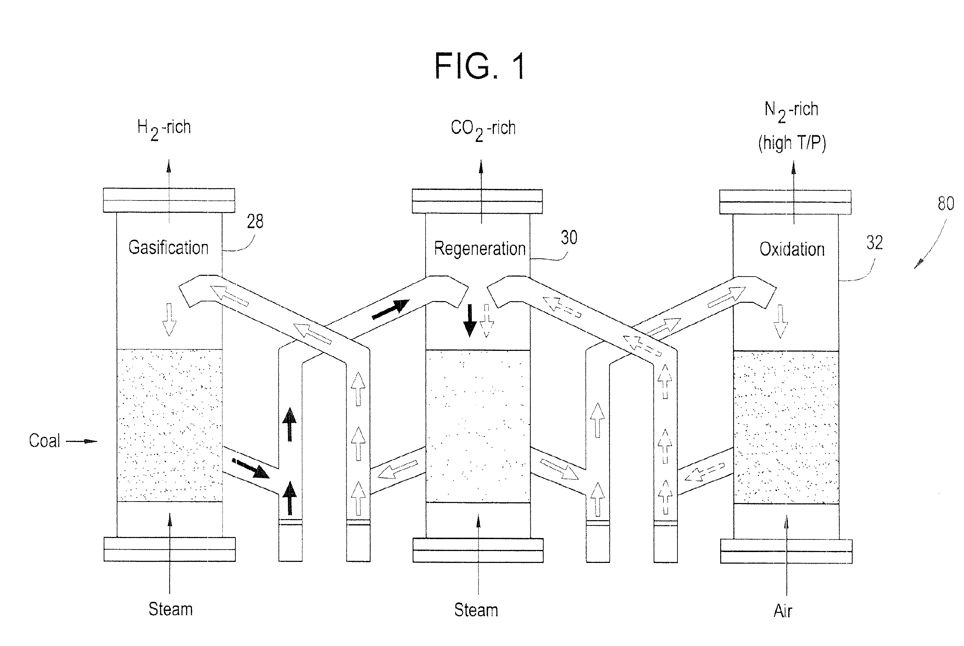

Referring now to the figures, wherein like elements in the several figures are numbered alike for convenience and clarity of the figures, but are not discussed in relation to each figure. Figure 1 schematically illustrates an unmixed fuel processor 80 and the flows therein. In unmixed fuel processer technology, solid hydrocarbon fuel (e.g., coal, biomass, etc.), water (e.g., steam), and air are converted into separate streams of hydrogen-rich gas in a gasification reactor 28, CO₂-rich gas that can be sent for sequestration in a regeneration reactor 30, and oxygen-depleted (vitiated) air in the oxidation reactor 32 (at high temperature (e.g., about 1,100°C to about 1,300°C) and pressure (e.g., about 1 atmospheres (atm) to about 60 atm)) that can be used to generate electricity, e.g., in a gas turbine expander. The UFP technology captures CO₂ at a high temperature (about 600°C to about 1,200°C, or, more specifically, about 750°C to about 1,100°C) and high pressure (about 1 atmospheres (atm) to about 60 atm, or, more specifically, about 20 atm) using CO₂ sorbent material. Further, as fuel and air are not mixed together and also because of the lower gas turbine inlet temperature (e.g., temperatures of less than or equal to about 1,300°C compared to about 1,400°C for other gas turbine systems), the UFP process can produce lower amounts of pollutants such as NOx as compared to a non-UFP process.

The UFP technology concept generally uses three circulating fluidized bed reactors containing CO₂ sorbent material and oxygen transfer material (OTM). CO₂ sorbent material (e.g., metal oxide and/or metal carbonate systems based on elements such as calcium (Ca), magnesium (Mg), sodium (Na), lithium (Li), silicon (Si), as well as combinations comprising at least one of the foregoing) absorbs and/or adsorbs CO₂ to form carbonates (sorbent-CO₂). The OTM is a metal oxide (e.g., an oxide of iron, nickel, copper, manganese, and so forth, as well as combinations comprising at least one of the foregoing), which can be oxidized to form metal oxides (OTM-O). A mixture of the bed materials is present in each reactor, and the bed materials undergo a variety of transformations and reactions as they move from one reactor to another. Each reactor serves a different key purpose: gasification, CO₂ release, or oxidation.

The gasification reactor 28 initially gasifies solid hydrocarbon fuel (e.g., coal and/or other fossil fuels containing elements C, H, O, as well as combinations comprising at least one of the foregoing); coal (e.g., pulverized coal) fed to this is partially gasified with water (e.g., superheated steam) to produce H₂, CO, and CO₂. Conditions in the gasification reactor (e.g., a temperature of about 600°C to about 900°C, or, more particularly, about 750°C to about 850°C; and a pressure of about 1 atm to about 60 atm, or, more particularly, about 15atm to about 20 atm) facilitate CO₂ absorption by the CO₂ sorbent material. The reduction in gas-phase CO₂ concentration shifts the equilibrium of the water-gas shift reaction to deplete CO from the gas phase (CO + H₂O → H₂ + CO₂). The removal of both CO and CO₂ in the gasification reactor 28 results in a H₂-rich product stream. The circulation of bed materials provides a continuous supply of fresh CO₂ sorbent material from and transfers spent CO₂ sorbent material to the regeneration reactor 30.

The regeneration reactor 30 is the location of CO₂ release from spent CO₂ sorbent material (sorbent-CO₂ + heat → sorbent+ CO₂), thereby regenerating the CO₂ sorbent. Regeneration occurs as the hot bed material (oxygen transfer material, e.g., at a temperature of about 1,100 to about 1,300°C) transferred from the oxidation reactor 32 heats regeneration reactor 30, increasing the bed temperature to a sufficient level for CO₂ release; e.g., to a temperature of about 900°C to about 1,100°C (e.g., at a pressure of about 1 atm to about 20 atm). The CO₂ release generates a CO₂-rich product stream suitable for sequestration. In addition, the oxidized oxygen transfer material from oxidation reactor 32 is reduced by the sygnas generated from gasification of char as it provides the oxygen needed to oxidize CO to CO₂ and H₂ to H₂O.

OTM-O + CO → OTM + CO₂

OTM-O + H₂ → OTM + H₂O

The reduced oxygen transfer material is oxidized in oxidation reactor 32:

OTM + ½ O₂ → OTM-O + heat

Hence, air fed to the oxidation reactor 32 re-oxidizes the oxygen transfer material via a highly exothermic reaction that consumes most of the oxygen in the air feed. Thus, the oxidation reactor 32 produces high-temperature (temperature of about 1,100°C to about 1,300°C), high-pressure (e.g., a pressure of greater than or equal to about 15 atm, or, more particularly, about 15 atm to about 20 atm) oxygen-depleted (vitiated) air for use in a gas turbine expander, as well as generating heat that is transferred to gasification reactor 28 and regeneration reactor 30, via solid transfer. Essentially, the regeneration reactor 30 exchanges bed materials with both gasification reactor 28 and oxidation reactor 32 with no direct gasification reactor-to-oxidation reactor transfer, thereby allowing for the regeneration and recirculation of both the CO₂ sorbent material and the oxygen transfer material. CO₂ sorbent material captures CO₂ in the gasification reactor 28 and releases it in regeneration reactor 30, while the oxygen transfer material is oxidized in oxidation reactor 32 and reduced in regeneration reactor 30. Other exemplary UFP units that can be used in the systems disclosed herein is disclosed in U.S. Patent Application Ser. No. 11/609,124 to Kulkarni et al., Attorney Docket No. 217323-1 (GE3-0180), filed concurrently herewith.

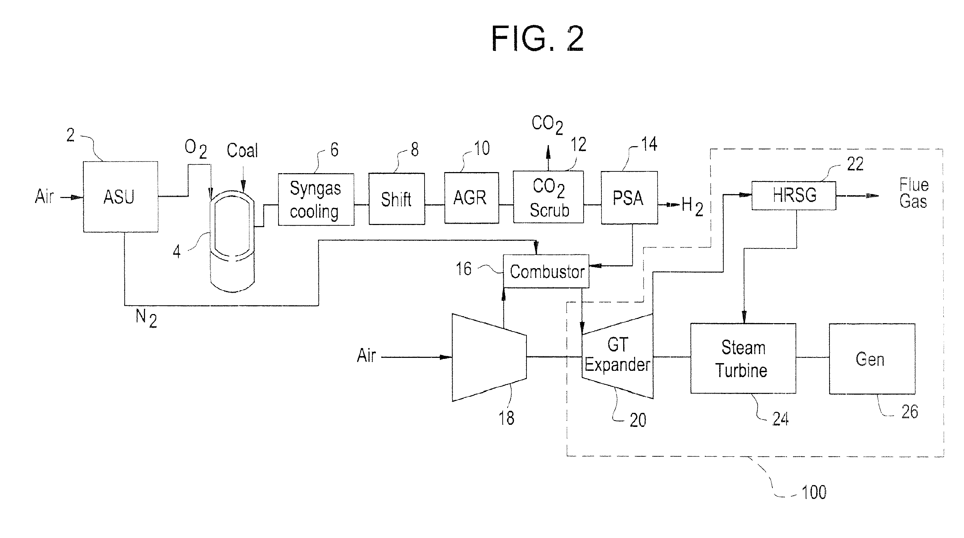

Referring now to Figure 2 that is a schematic view of an exemplary integrated gasification combined cycle (IGCC) polygeneration plant for electricity production from a solid hydrocarbon fuel (e.g., coal). The plant includes an air separation unit 2 that receives air and separates the oxygen and nitrogen. The oxygen enters a syngas generator 4 along with coal. From the generator 4, the syngas is cooled in a heat exchanger 6 prior to entering a water gas shift reactor (shift reactor) 8 where carbon monoxide in the stream is converted to carbon dioxide. From the shift reactor, the stream then passes through a gas clean-up unit (e.g., a syngas clean-up unit, an acid gas recovery (AGR) unit, and the like) 10 to remove sulfur, carbon dioxide scrubber 12 to remove carbon dioxide (CO₂), and pressure swing absorption (PSA) unit 14 to separate impurities from the hydrogen (H₂) stream. The impurities are burned in a combustor 16 along with the nitrogen stream from the air separation unit and compressed air from compressor 18. The combustion stream enters the power generating unit 100 comprising optional expander(s) 20 (e.g., turbines), heat recovery steam generator(s) (HRSG) 22, steam turbine(s) 24 and generator(s) 26.

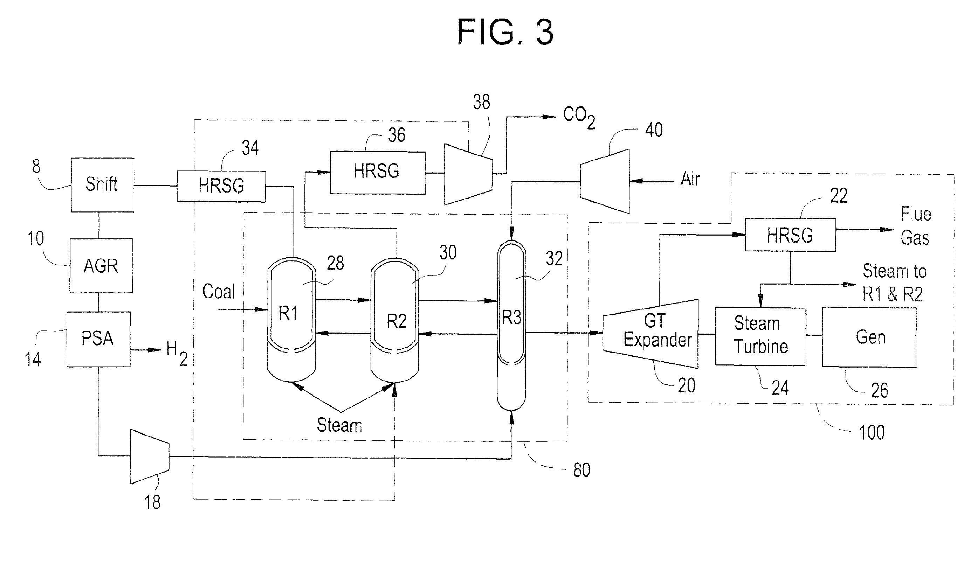

Figure 3 shows the UFP process, described in Figure 1, integrated in a polygen plant that can produce hydrogen and/or electricity along with CO₂ capture. In Figure 3, the air separation unit is not required (not shown) as with many polygen plants, CO₂ separation is inherent in the unmixed fuel processor (UFP) 80 comprising reactors 1 (R1), 2 (R2), and 3 (R3), and heat exchange losses are reduced or eliminated due to the use of oxygen depleted air (vitiated stream) in the expander 20. In this arrangement, air is introduced directly to a compressor 40 prior to entering the UFP 80. The compressor can compress the air to a pressure of about 2 atm to about 60 atm, or, more specifically, about 15 atm to about 20 atm. In the UFP 80, air and the compressed PSA off-gas from the PSA unit 14 enter the oxidation reactor 32 where oxygen transfer material is oxidized prior to entering the CO₂ release reactor 30 (regeneration reactor).

From the CO₂ release reactor 30, reduced oxygen transfer material returns to the oxidation reactor 32, and regenerated CO₂ sorbent material passes to the gasification reactor 28, while a CO₂ rich stream can pass through heat recovery steam generator and condenser 36 and/or through compressor 38 prior to sequestration. The CO₂ stream can then be sequestered. Part of the high pressure CO₂ stream can be recycled to the CO₂ release reactor 30. Recycle of CO₂ decreases the steam requirement for fluidization and thus increases the overall efficiency of the process (e.g., an increase in efficiency of greater than or equal to 0.5%, or, even greater than or equal to about 2%).

In the gasification reactor 28, coal is gasified and the CO₂ sorbent material captures CO₂, facilitating the water gas shift reaction that converts additional CO to CO₂ for adsorption and produces a H₂ rich stream containing greater than or equal to about 60 volume percent (vol%) H₂ in the syngas stream, or, more specifically about 60 vol% to about 90 vol% H₂ in the syngas. The CO₂ sorbent material returns to the CO₂ release reactor 30, while the gasification reactor effluent (a CO₂ reduced stream) can pass from the gasification reactor 28, and through a heat recovery steam generator 34, a shift reactor 8, a gas clean-up (e.g., an acid gas recovery (AGR)) unit 10, and pressure swing absorption unit 14. The shift reactor 8 can reduce the concentration of CO in the CO₂ reduced stream from about 10 vol% to about 30 vol% down to less than or equal to about 1 vol%, while producing more H₂. The acid gas recovery unit 10 removes impurities such as chlorine, sulfur, and ammonia, from the stream (e.g., from the coal-derived syngas). The pressure swing absorption unit 14 further purifies the stream from shift reactor to produce a pure H₂ stream (e.g., 99.99% pure) that can be employed, for example, for fuel cell based applications.

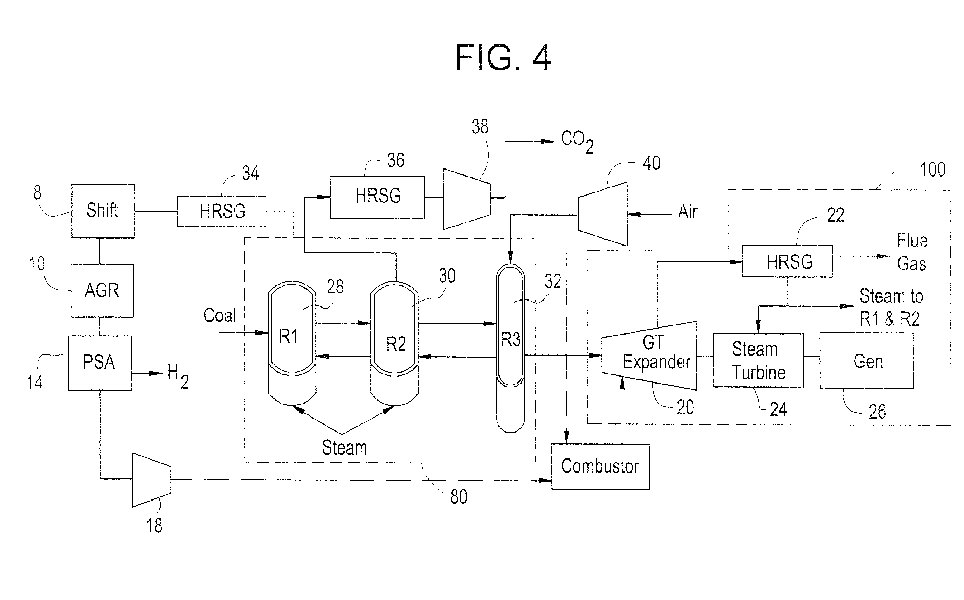

The hydrogen stream exiting the PSA unit 14 can be used as desired (e.g., liquefaction, fuel cells, turbines, and so forth), while the PSA off-gas can be compressed in compressor 18 and returned to the oxidation reactor 32 and/or combusted. In other words, all of the PSA off-gas can be recycled to the oxidation reactor 32, or all of the PSA off-gas can be combusted, or, a portion of the PSA off-gas can be recycled to the oxidation reactor 32 while another portion of the PSA off-gas can be combusted. With the recycle of CO₂ to the regeneration reactor 30, steam flow to the reactor can be reduced and hence operating costs can be reduced. An effluent stream from the oxidation reactor 32 and/or combustor (see Figure 4), can then be used in the power generating unit 100.

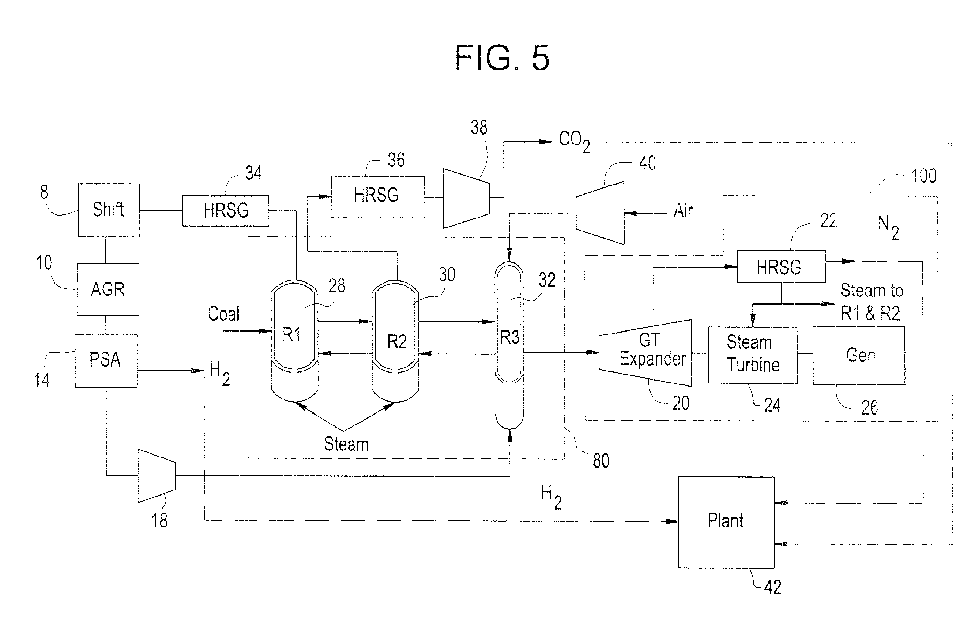

As noted above and as illustrated in Figure 4, the PSA off-gas can be directed to the oxidation reactor 32 and/or a combustor 16. When all or a portion of the PSA off-gas is combusted, the combustion stream can be directed to the expander 20 of the power generating unit 100. Combustion of the PSA off-gas enhances system efficiency due to the introduction of higher temperature gas (about 1,300°C to about 1,400°C) to the expander 20. In addition, or alternative, to using PSA off-gas in a combustor 16, all or a portion of the hydrogen stream from the PSA unit 14 can be used in various plant(s) 42. (See Figure 5) Possible plant(s) 42 include urea, ammonia, and so forth, as well as combinations comprising at least one of these plants.

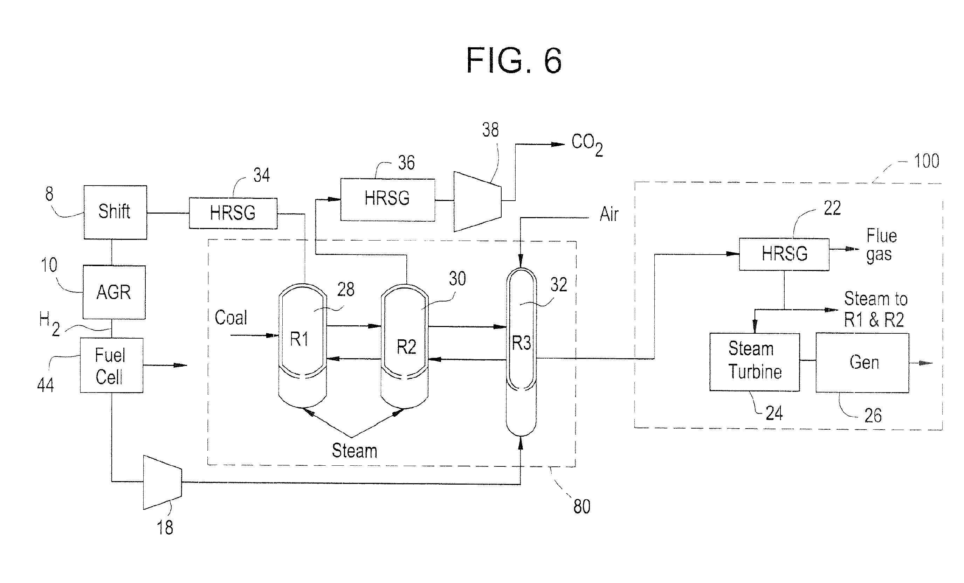

In Figure 6, the PSA unit has been replaced with a fuel cell 44. In this embodiment, the compressor 40 and expander 20 have been removed, allowing direct fluid communication between the compressor 18 and the oxidation reactor 32, and between the oxidation reactor 32 and the heat recovery steam generator 22. The optional removal of the compressor 40 and expander 20 (see Figure 3), enables the low pressure electricity generation. As a result, capital expenditures can be minimized with the low pressure, low temperature production of electricity.

These systems employing power generation with the unmixed fuel processor (UFP) as disclosed herein enable multiple advantages over systems that do not employ the UFP. For example, (i) a fuel cell can be added to the system to further enable electricity generation and/or back-up power generation, an air separation unit is not required as in many power generation systems; (ii) CO₂ separation is inherent in the UFP system disclosed; (iii) the hydrogen from the UFP is substantially rich (e.g., greater than or equal to about 80 vol%), thereby reducing the load on the pressure swing absorber; (iv) since a hot oxygen depleted stream can be sent directly to the power generating unit, heat exchange losses are eliminated; (v) the recirculation of the CO₂ to the regeneration reactor reduces the amount of steam needed in that reactor, thereby enhancing system efficiency; (vi) the use of the combustor to combust some or all of the PSA off-gas increases inlet temperatures to the expander, again improving system efficiency; and (vii) the hydrogen and nitrogen produced in the system are in a condition that can be used to produce urea and/or ammonia.

Ranges disclosed herein are inclusive and combinable (e.g., ranges of "up to about 25 wt%, or, more specifically, about 5 wt% to about 20 wt%", is inclusive of the endpoints and all intermediate values of the ranges of "about 5 wt% to about 25 wt%," etc.). "Combination" is inclusive of blends, mixtures, alloys, reaction products, and the like. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the state value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.
Various aspects and embodiments of the present invention will now be defined in the following numbered clauses:
1. A system for using an unmixed fuel processor, comprising:
   an unmixed fuel processor comprising
      a gasification reactor with a solid hydrocarbon fuel inlet, water inlet, and hydrogen outlet, and comprising a CO₂ sorbent material;
      an oxidation reactor with an air inlet and effluent outlet, and comprising an oxygen transfer material; and
      a regeneration reactor with a water inlet and a CO₂ stream outlet, wherein the regeneration reactor is configured to receive spent CO₂ sorbent material from the gasification reactor and to return regenerated CO₂ sorbent material to the gasification reactor, and configured to receive oxidized oxygen transfer material from the oxidation reactor and to return reduced oxygen transfer material to the oxidation reactor; and
   a power generating unit configured to receive an oxygen depleted stream from the oxidation reactor and to produce electricity.
2. The system of Clause 1, wherein the power generating unit comprises
   an expander configured to reduce the pressure of the oxygen depleted stream to produce a reduced pressure stream;
   a first heat recovery steam generator configured to transfer heat from the reduced pressure stream to a water stream to produce steam; and
   a steam turbine configured to generate electricity from the steam.
3. The system of any preceding Clause, further comprising a plant configured to receive hydrogen from the gasification reactor and nitrogen from the first heat recovery steam generator, and to produce ammonia.
4. The system of any preceding Clause, further comprising a plant configured to receive hydrogen from the gasification reactor, nitrogen from the first heat recovery steam generator, and CO₂ from the regeneration reactor, and configured to produce urea.
5. The system of any preceding Clause, further comprising a plant configured to receive hydrogen from the gasification reactor and to produce a material selected from the group consisting of urea, ammonia, and combinations comprising at least one of the foregoing materials.
6. The system of any preceding Clause, further comprising
   a second heat recovery steam generator configured to receive a hydrogen stream from the gasification reactor;
   a shift reactor configured to receive the hydrogen stream from the second heat recovery steam generator and to convert CO in the hydrogen stream to CO₂;
   a gas clean-up unit configured to receive the hydrogen stream from the shift reactor and to reduce a concentration of an impurity in the hydrogen stream; and
   a pressure swing absorption unit configured to receive the hydrogen stream from the gas clean-up unit, to separate hydrogen in the hydrogen stream from other stream components, and to produce a purified hydrogen stream and a PSA off-gas; and
   a compressor configured to receive and compress the PSA off-gas to form a compressed PSA-off gas;
   wherein the oxidation reactor and/or a combustor are configured to receive the compressed PSA off-gas.
7. The system of any preceding Clause, wherein the combustor is configured to receive all of the compressed PSA off-gas stream and to produce a combustion stream, the power generating unit is configured to receive the combustion stream, and the oxidation reactor is configured to receive no compressed PSA off-gas.
8. The system of any preceding Clause, further comprising
   a second heat recovery steam generator configured to receive a hydrogen stream from the gasification reactor;
   a shift reactor configured to receive the hydrogen stream from the second heat recovery steam generator and to convert CO in the stream to CO₂;
   a gas clean-up unit configured to receive the hydrogen stream from the shift reactor and to remove from the hydrogen stream; and
   a fuel cell configured to receive the hydrogen stream from the gas clean-up unit and to produce electricity and a by-product stream;
   wherein the compressor is configured to receive the by-product stream from the fuel cell.
9. The system of any preceding Clause, wherein the power generating unit comprises
   a first heat recovery steam generator configured to transfer heat from the oxygen depleted stream to a water stream to produce steam; and
   a steam turbine configured to generate electricity from the steam.
10. The system of Clause 8 or Clause 9, wherein the first heat recovery steam generator is in direct fluid communication with the oxidation reactor and the oxidation reactor is in direct fluid communication with the compressor.
11. The system of any preceding Clause, further comprising a second compressor configured to compress air prior to the air entering the oxidation reactor.
12. The system of any preceding Clause, further comprising a third heat recovery steam generator configured to receive a CO₂ stream from the regeneration reactor.
13. The system of any preceding Clause, wherein the regeneration reactor is configured to receive a portion of the CO₂ stream.
14. A system for producing electricity, comprising:
   an unmixed fuel processor comprising
      a gasification reactor with a solid hydrocarbon fuel inlet, steam inlet, and hydrogen outlet, and comprising a CO₂ sorbent material;
      an oxidation reactor with an air inlet and effluent outlet, and comprising an oxygen transfer material; and
      a regeneration reactor with a steam inlet and a CO₂ stream outlet, wherein the regeneration reactor is configured to receive spent CO₂ sorbent material from the gasification reactor and to return regenerated CO₂ sorbent material to the gasification reactor, and configured to receive oxidized oxygen transfer material from the oxidation reactor and to return reduced oxygen transfer material to the oxidation reactor;
   a shift reactor configured to receive the hydrogen-rich syngas stream from the gasification reactor and to convert CO in the hydrogen stream to CO₂;
   a gas clean-up unit configured to receive the hydrogen-rich syngas stream from the shift reactor and to reduce a concentration of an impurity in the hydrogen stream;
   a pressure swing absorption unit configured to receive the hydrogen stream from the gas clean-up unit, to separate hydrogen in the hydrogen stream from other stream components, and to produce a purified hydrogen stream and a PSA off-gas; and
   a compressor configured to receive and compress the PSA off-gas to form a compressed PSA-off gas; and
   a power generating unit configured to receive an oxygen depleted stream from the oxidation reactor and to produce electricity;
   wherein the oxidation reactor and/or a combustor are configured to receive the compressed PSA off-gas.
15. A method for producing electricity, comprising:
   gasifying solid hydrocarbon fuel with water;
   adsorbing CO₂ with a CO₂ adsorbing material to produce a spent CO₂ sorbent material and a hydrogen stream comprising hydrogen;
   oxidizing an oxygen transfer material and producing an oxygen depleted stream in an oxidation reactor;
   regenerating the spent CO₂ adsorbing material and the oxidized oxygen transfer material and producing a CO₂ stream; and
   generating electricity in a power generating unit with the oxygen depleted stream.
16. The method of Clause 15, wherein generating the electricity further comprises
   reducing a pressure of the oxygen depleted stream;
   producing steam by transferring heat from the oxygen depleted steam to form a cooled stream; and
   passing the steam through a steam turbine.
17. The system of Clause 15 or Clause 16, further comprising reacting the hydrogen with nitrogen in the cooled stream to produce ammonia.
18. The system of any one of Clauses 15 to 17, further comprising reacting the hydrogen, nitrogen in the cooled stream, and the CO₂ in the CO₂ stream, to produce urea.
19. The method of any one of Clauses 15 to 18, wherein generating the electricity further comprises
   using the hydrogen in a fuel cell to produce electricity;
   producing steam by transferring heat from the oxygen depleted steam; and
   passing the steam through a steam turbine to produce additional electricity.
20. The method of any one of Clauses 15 to 19, further comprising reacting hydrogen to produce a material selected from the group consisting of urea, ammonia, and combinations comprising at least one of the foregoing materials.
21. The method of any one of Clauses 15 to 20, further comprising
   recovering heat from the hydrogen stream;
   converting CO in the hydrogen stream to CO₂;
   reducing a concentration of an impurity in the hydrogen stream; and
   separating hydrogen in the hydrogen-rich syngas stream from other stream components to form a purified hydrogen stream and a PSA off-gas;
   compressing the PSA off-gas.
22. The method of Clause 21, further comprising combusting the compressed PSA off-gas to produce a combustion stream and producing electricity with the combustion stream.
23. The method of Clause 21 or 22, further comprising introducing the compressed PSA off-gas to the oxidation reactor.

## Claims

1. A system for using an unmixed fuel processor (80), comprising:
an unmixed fuel processor (80) comprising
a gasification reactor (28) with a solid hydrocarbon fuel inlet, water inlet, and hydrogen outlet, and comprising a CO₂ sorbent material;
an oxidation reactor (32) with an air inlet and effluent outlet, and comprising an oxygen transfer material; and
a regeneration reactor (30) with a water inlet and a CO₂ stream outlet, wherein the regeneration reactor (30) is configured to receive spent CO₂ sorbent material from the gasification reactor (28) and to return regenerated CO₂ sorbent material to the gasification reactor (28), and configured to receive oxidized oxygen transfer material from the oxidation reactor (32) and to return reduced oxygen transfer material to the oxidation reactor (32); and
a power generating unit (100) configured to receive an oxygen depleted stream from the oxidation reactor (32) and to produce electricity.

2. The system of Claim 1, wherein the power generating unit (100) comprises
an expander (20) configured to reduce the pressure of the oxygen depleted stream to produce a reduced pressure stream;
a first heat recovery steam generator (22) configured to transfer heat from the reduced pressure stream to a water stream to produce steam; and
a steam turbine (24) configured to generate electricity from the steam.

3. The system of any of Claims 1 - 2, further comprising
a second heat recovery steam generator (34) configured to receive a hydrogen stream from the gasification reactor (28);
a shift reactor (8) configured to receive the hydrogen stream from the second heat recovery steam generator (34) and to convert CO in the hydrogen stream to CO₂;
a gas clean-up unit configured to receive the hydrogen stream from the shift reactor (8) and to reduce a concentration of an impurity in the hydrogen stream; and
a pressure swing absorption unit (14) configured to receive the hydrogen stream from the gas clean-up unit, to separate hydrogen in the hydrogen stream from other stream components, and to produce a purified hydrogen stream and a PSA off gas; and
a compressor (18, 38, 40) configured to receive and compress the PSA off-gas to form a compressed PSA-off gas;
wherein the oxidation reactor (32) and/or a combustor (16) are configured to receive the compressed PSA off-gas.

4. The system of any of Claims 1 - 2, further comprising
a second heat recovery steam generator (34) configured to receive a hydrogen stream from the gasification reactor (28);
a shift reactor (8) configured to receive the hydrogen stream from the second heat recovery steam generator (34) and to convert CO in the stream to CO₂;
a gas clean-up unit configured to receive the hydrogen stream from the shift reactor (8) and to remove from the hydrogen stream; and
a fuel cell configured to receive the hydrogen stream from the gas clean-up unit and to produce electricity and a by-product stream;
wherein the compressor (18, 38, 40) is configured to receive the by-product stream from the fuel cell.

5. The system of any of Claims 1 - 4, wherein the regeneration reactor (30) is configured to receive a recycled CO₂ stream.

6. A method for producing electricity, comprising:
gasifying coal with water;
adsorbing CO₂ with a CO₂ adsorbing material to produce a spent CO₂ sorbent material and a hydrogen stream comprising hydrogen;
oxidizing an oxygen transfer material and producing an oxygen depleted stream in an oxidation reactor (32);
regenerating the spent CO₂ adsorbing material and the oxidized oxygen transfer material and producing a CO₂ stream; and
generating electricity in a power generating unit (100) with the oxygen depleted stream.

7. The method of Claim 6, wherein generating the electricity further comprises
using the hydrogen in a fuel cell to produce electricity;
producing steam by transferring heat from the oxygen depleted steam; and
passing the steam through a steam turbine (24) to produce additional electricity.

8. The method of any of Claims 6 - 7, further comprising reacting hydrogen to produce a material selected from the group consisting of urea (42), ammonia (42), and combinations comprising at least one of the foregoing materials.

9. The method of any one of Claims 6 to 8, further comprising
recovering heat from the hydrogen stream;
converting CO in the hydrogen stream to CO₂;
reducing a concentration of an impurity in the hydrogen stream; and
separating hydrogen in the hydrogen-rich syngas stream from other stream components to form a purified hydrogen stream and a PSA off-gas;
compressing the PSA off-gas.

10. The method of Claim 9, further comprising
combusting the compressed PSA off-gas to produce a combustion stream and producing electricity with the combustion stream; and/or
introducing the compressed PSA off-gas to the oxidation reactor (32).
